(19) Europäisches Patentamt
European Patent Office
Office européen des brevets

(11) **EP 3 343 786 B1**

(12) **EUROPEAN PATENT SPECIFICATION**

(45) Date of publication and mention
of the grant of the patent:
**26.02.2020  Bulletin 2020/09**

(51) Int Cl.:
***H04B 3/32*** *(2006.01)*      ***H04B 3/46*** *(2015.01)*

(21) Application number: **16306834.9**

(22) Date of filing: **28.12.2016**

(54) **METHOD AND DEVICE FOR CONFIGURING DATA TRANSMISSION OVER A PLURALITY OF DATA LINES**

VERFAHREN UND VORRICHTUNG ZUM KONFIGURIEREN EINER DATENÜBERTRAGUNG ÜBER MEHRERE DATENLEITUNGEN

PROCEDE ET DISPOSITIF POUR CONFIGURER UNE TRANSMISSION DE DONNEES SUR UNE PLURALITE DE LIGNE DE DONNEES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**04.07.2018  Bulletin 2018/27**

(73) Proprietor: **Alcatel Lucent**
**91620 Nozay (FR)**

(72) Inventors:
• **Tsiaflakis, Paschalis**
**2018 Antwerpen (BE)**
• **Nuzman, Carl Jeremy**
**Murray Hill, NJ 07974-0636 (US)**

(74) Representative: **Novagraaf Technologies**
**Bâtiment O2**
**2, rue Sarah Bernhardt**
**CS90017**
**92665 Asnières-sur-Seine Cedex (FR)**

(56) References cited:
**US-A1- 2006 280 237      US-A1- 2015 222 326**
**US-A1- 2016 072 532**

**Description**

Technical Field

The present invention relates to the field of data communication. Particularly, the present invention relates to data communication over a medium with multiple communication channels that interfere with each other, for example in the DSL domain.

Background

VDSL2 vectoring technology uses a frequency range up to 17 MHz. For newer versions of VDSL2, so-called G.fast technology, the used frequency ranges are extended up to 106 MHz and even 212 MHz in newer G.fast profile definitions. At these high frequencies, the crosstalk levels significantly increase, where one can even observe crosstalk levels as large as the direct signals. The impact of such large crosstalk is that the vectoring pre-compensation signals become large and that the channel matrices can be ill-conditioned. This also means that the vectored data rates that are allocated to the lines of a cable binder become coupled.

A drawback of using the higher frequency ranges in the DSL domain, is that the crosstalk significantly affects the data rate balance between multiple data lines connected to a single distribution point unit (DPU). In a practical situation, a single distribution point unit is arranged in a residential area wherein each data line provides data communication services to a residence in the area. The skilled person will understand that in such practical situation, it is desirable to find a desired balance between minimizing data rate differences between the multiple data lines and maximizing throughput for each data line.

US2015/0222326 relates to systems, methods and apparatuses for implementing a DSL system, disclosing a vectoring engine and a cross-connect coupled to the vectoring engine. US2006/0280237 relates to a DSL system loading and ordering technique. US2016/0072532 relates to a dynamic digital communication system control.

It is an object of the present invention to allow a network operator to find an improved balance between minimizing data rate differences between the multiple data lines and maximizing throughput for each data line.

Summary

The invention is defined by the appended independent claims. Dependent claims constitute embodiments of the invention. Any other subject-matter outside the scope of protection of the claims is to be regarded as examples not in accordance with the invention.

By determining and outputting the data rates to an operator, the operator can take knowledge of the data rates including the data rate balances in the network. This allows the operator indirectly to take knowledge of the imbalance between the lines connected to an access device. By providing an input mechanism for the operator to input at least one data rate balance related control, the operator can influence, after taking knowledge of the imbalance, the balance between the lines. The at least one data rate balance related control provided via the input mechanism is used to calculate configuration parameters for the access device, thereby influencing the data rate balance. These parameters are used to configure the access device.

The method of the invention provides the operator with a tool to find an improved balance between minimizing data rate differences between the multiple data lines and maximizing throughput for each data line. The optimal balance can be obtained by informing the operator regarding the data rates and by providing the operator with a mechanism to influence the balance, being at least one data rate balance related control. Data rates can include both downstream as well as upstream data rates. Downstream transmission refers to the transmission from the network side access node to the end-user CPEs, whereas upstream transmission refers to the transmission in the opposite direction. In the context of this invention the term operator can be seen very broad. It can be anybody that is using this method for balancing the data rates via the monitoring device.

Brief description of the figures

Some embodiments of apparatus and/or methods in accordance with embodiments of the present invention are now described, by way of example only, and with reference to the accompanying drawings, in which:

Figure 1 is a block diagram of a DSL network,
Figure 2 is a graph which illustrates the data rates of multiple data lines of the DSL network of Figure 1,
Figure 3 is a flowchart of a method for configuring data rates in the DSL network of Figure 1,
Figure 4 illustrates a graphical user interface used in the method of Figure 3,

Figure 5 is a graph illustrating a utility function which can be used in the method of Figure 3, and

Figure 6 is a structural view of a monitoring device of the DSL network of Figure 1.

Detailed description of embodiments

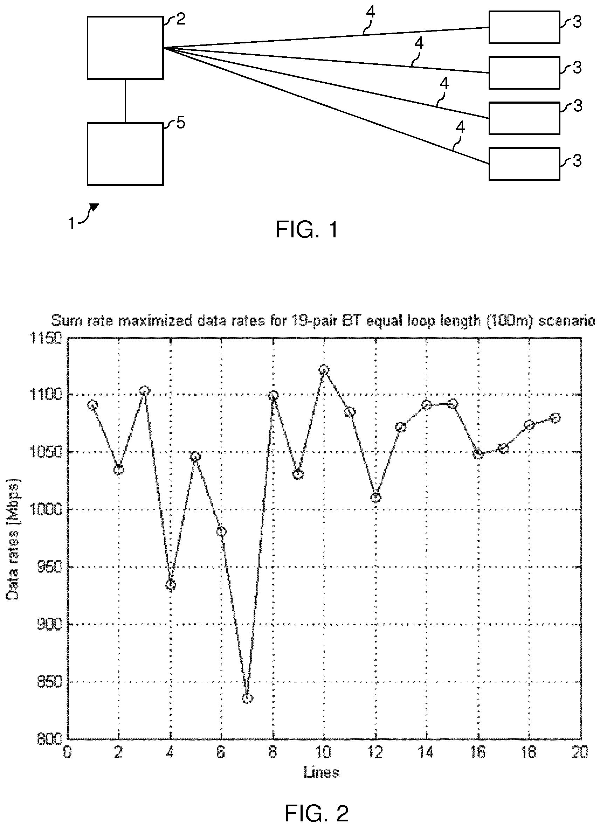

**Figure 1** is a block diagram of a DSL network 1. The DSL network 1 comprises one or more access nodes 2 (only one of which is shown), a plurality of client devices 3, a plurality of data lines 4 and a monitoring device 5.

An access node 2 is connected to a plurality of client devices 3 through respective data lines 4. Data lines 4 extend together in a cable binder along a part of their lengths. An access node 2 and a client device 3 are configured for communication through a data line 4 using DSL technology and vectoring, for example based on G.fast or XG-Fast. An access node 2 is for example a Distribution Point Unit (DPU) and a client device 3 is for example a CPE, a DSL modem...

An access node 2 provides operational data describing the functioning of its DSL ports. The operational data specifies operational parameters, which include the data rates on the respective data lines 4. The operational data also preferentially includes information indicative of channel conditions, including complex crosstalk channel coefficients, direct channel coefficients, and noise levels.

The monitoring device 5 interacts with an access node 2 to obtain the operational data, performs monitoring, management and/or troubleshooting tasks in function of the operational data, and configure the access node 2 by sending configuration parameters. The monitoring device 5 is for example referred to as a Network Analyzer. A monitoring task executed by monitoring device 5 allows a operator to configure the data rate balance between the data lines 4, and this is described hereafter in more details with reference to Figure 2 to 5.

Indeed, it is technically possible to balance data rates between lines, which means that G.fast vectored transmission can be perceived as a transmission over a shared medium. For instance, reducing the data rate of a line can improve the data rates of all other lines in the cable binder, whereas increasing the data rate of a line can degrade the performance of all other lines. A drawback in this setting is that the data rates can be very unbalanced and that it cannot be predicted how unbalanced that the data rates will be until certain system parameters, such as interference levels, are measured. For instance, for a cable binder with equal loop lengths the vectored data rates can differ significantly, for example more than 30%. An example is displayed in **Figure 2,** which are the G.fast vectored data rates for a 19-pair cable binder with line lengths of 100 meter. It can be seen that the data rate of line 7 and line 10 differ by more than 30%. This data rate imbalance is an important technical problem.

The drawback described above is formulated for G.fast, but the skilled person will readily recognize that the same data rate imbalance problem will be present in other upcoming technologies such as XG-fast.

In academic literature, solutions are described to tackle this data rate imbalance problem by 'fair resource allocation' in which resources, for example powers or MIMO matrices, are optimized to achieve different fairness objectives, for example max-min fairness, which is to maximize the minimum data rates, or proportional fairness, which is to maximize the sum of the logarithms of the data rates. In the past these solutions have been mainly elaborated for wireless systems, where channel conditions change rapidly, reducing the impact of any one channel realization, and also making human intervention infeasible. When channels are semi-permanent, as in wireline systems, intervention of a human technician can be justified.

For an operator, it is not always easy to specify what its goals and preferences are, or that those goals are not always specified by a very simple formula. For instance, one may choose the approach of maximizing the minimum of the data rates, but this can degrade the performance of all lines too much for the benefit of one line only. Such approach may be good for some cases but certainly not for all cases. In many wireless systems, fairness is achieved after averaging over many different random channel realizations. However, when channels are semi-permanent, it is important to meet operator goals as much as possible for each channel realization. This is a problem for G.fast operators that want to align the balancing of the G.fast vectored rates with the concrete services that they are offering at different locations, for different type of customers, etc. There is no general automatic approach that can tackle all cases or that can help in guiding towards good configurations.

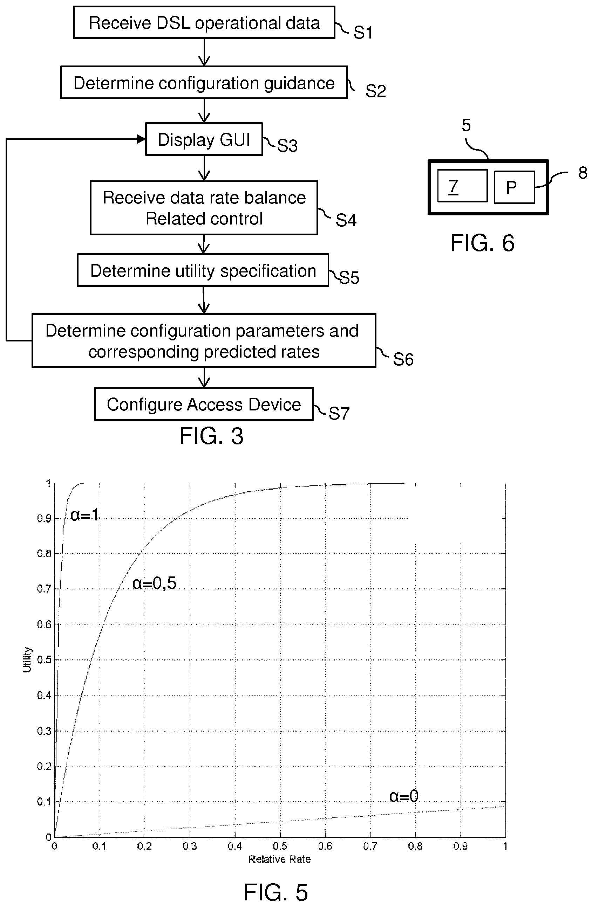

**Figure 3** is a flowchart of a method for configuring data transmission in the DSL network 1, executed by the monitoring device 5. This method may be described as an interactive vectoring strategy control, e.g. with a graphical user interface in the monitoring device 5, to guide the operator towards a good data rate balance configuration. This can be seen as a semi-automatic solution to the G.fast vectored data rate imbalance problem, where the operator is guided towards optimal usage of his access network.

The monitoring device 5 interacts with an access node 2 and obtains operational parameters provided by the access node 2 (Step S1). The operational parameters specify at least the data rates of the respective active data lines 4 connected to the access node 2.

Then, the monitoring device 5 determines configuration guidance in function of the operational parameters (Step S2). The configuration guidance includes for example a recommended rate interval between which the operator is advised to adapt the data rates. A recommended rate interval consists of a maximum rate and a minimum rate between which the operator should configure a target rate for a data line 4, in embodiments in which the operator provides explicit target rates to be used by an utility specification. These maximum and minimum rates can be determined using different techniques or predetermined rules. More specifically, the per line max rate of the rate interval is an indication of a recommended maximum data rate that the operator should configure for the line. It can be for example the single line performance or the beamforming rate performance. The per line min rate of the rate interval is an indication of a recommended minimum data rate that the operator should configure for the data line 4. For instance, this can be the data rate below which little or no additional benefit can be achieved for the other lines if one configures a lower data rate on the given line. For example, a threshold of 2% rate loss is then indicated which is used to generate the min data rates to be considered.

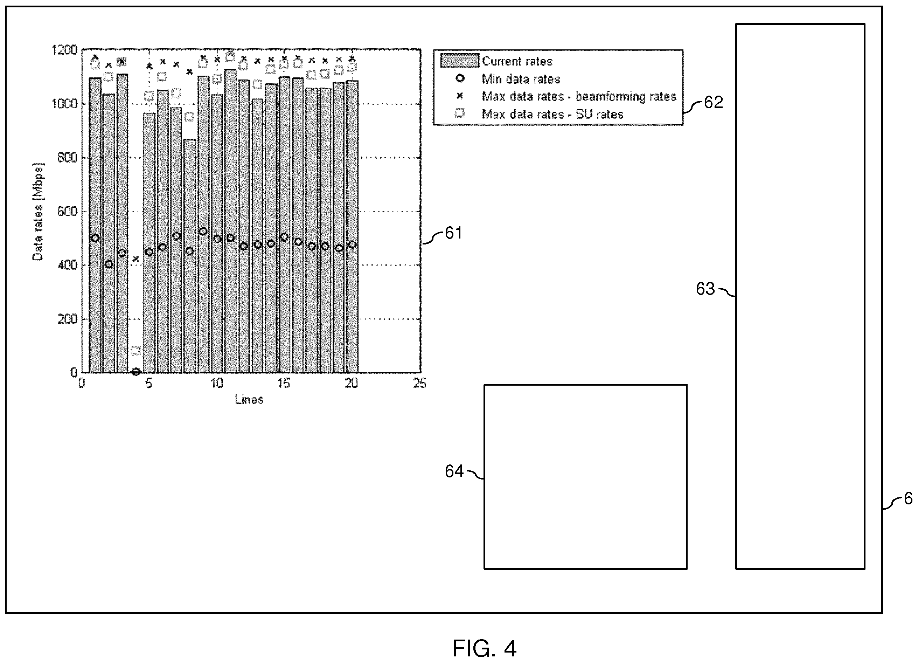

Then, the monitoring device 5 outputs a user interface (typically displays a graphical user interface) (Step S3). An example of graphical user interface (GUI) 6 is shown on **Figure 4**. The GUI 6 comprise a performance panel 61, a legend panel 62, a control panel 63 and an action panel 64.

The performance panel 61 includes a plot showing the current allocated G.fast vectored data rates for all active data lines 4. The plot also shows cues representative of the configuration guidance determined at step S2, that indicate to the operator how he may best configure the data rates in the DSL network 1 to optimize usage of the network. In the performance panel 61 of Figure 4, the single line rates are shown as max rates with a square, the beamforming rates with a cross, and the min data rates are shown with a circle mark.

The legend panel 62 shows the meaning of symbols used in the performance panel 61.

The control panel 63 include one or more input mechanisms allowing the operator to input one or more data rate balance related controls for imposing high-level vectoring strategies. Example of data rate balance related controls include per line priority levels, a utility specification, a fairness parameter, an upstream/downstream ratio. The details of the input mechanisms are not illustrated for simplicity.

Per line priority levels can be translated into weights specifying the relative importance of the data rate goals specified for each line. The higher or lower priority level, respectively, is used to indicate that the corresponding data line 4 needs to be given more or less data rate (relatively to other data lines 4, or absolutely). Preferably the weights are considered relative to each other, for example implemented by valuing the weights such that the sum of all weights is one. The input mechanism for per line priority levels is for example an individual slider for each data line 4, which can be moved up or down by the operator. When one of the slider is moved by the operator, all the other sliders are scaled down or up to maintain unit sum weight for example. A larger weight will prioritize this data line 4 in terms of improved data rates, if feasible.

The utility specification allows the operator to specify a utility function to optimize or to choose between different predetermined utility functions to optimize. It also includes target rates, which are considered to be lower bound constraints on the rates of each data line 4. When no constraint is desired, the target rate can be set to zero. The utility function is a function of the data rates that expresses a particular fairness objective to pursue. This function or the target rates can be parametrized by a fairness parameter $\alpha$ which can tune the utility specification towards a particular direction. Examples of such parametrized utility specifications are discussed hereunder. The utility specification may also be a function of the priority levels or of weights derived from the priority levels. The input mechanism for the utility function is for example a utility function design box or list box allowing to select from a plurality of predefined utility functions. The input mechanism for the fairness parameter is for example in the form of a knob or slider. Via the fairness parameter, the data rate balance can be steered towards more fair data rate allocations. For example, an input can be given that varies from 0, corresponding to sum data rate maximization, to 1, corresponding to maximize the minimum data rate. In some embodiments, the target rates may be determined automatically as a function of the fairness parameter, and in other embodiments, individual target rates may be explicitly specified by the operator, for example through a slider or graph.

A first example of utility specification includes the following utility function $f_{objective}$ to be maximized:

$$\text{Max } f_{objective} \text{ with } f_{objective}(R,\beta) := \begin{cases} \sum_{n=1}^{N} w_n \dfrac{(R_n)^{1-\beta}}{1-\beta}, & \beta \neq 1, \beta \geq 0 \\ \sum_{n=1}^{N} w_n \log(R_n), & \beta = 1 \end{cases}$$

where $R_n$ refers to the data rate of line n, and where parameters $w_n$ (weights) are derived from priority levels assigned to each line, and where the parameter $\beta$ is defined in terms of the fairness parameter $\alpha$ as $\beta = \alpha/(1-\alpha)$. Configuring the fairness parameter $\alpha$ equal to 0, ($\beta = 0$), corresponds to maximizing the weighted sum rate, which disregards fairness in the allocation of data rates. Configuring the fairness parameter $\alpha$ close to 1 ($\beta$ very large) and the weights $w_n$ equal to 1, corresponds to maximizing the minimum data rates, which is the fairest configuration as all lines are to be allocated equal data rates. Non-zero target rates, if used, may be specified explicitly by the operator.

In a second example utility specification, the utility function is just a linear function U(R) = R, while the target rates are calculated automatically as a function of the fairness parameters. In particular the target rates $R_n^{t\arg et}$ are chosen to lie in between the average rate and sum rates:

$$R_n^{t\arg et} = R^{avg} + (1-\alpha)(R_n^{sum} - R^{avg})$$

with $R^{avg}$ denoting the average of the currently allocated data rates,

and $R_n^{sum}$ denoting the data rate of user n when maximizing the sum rate performance without target rate constraints.

In a third example of a utility specification, the utility function is based on exponential functions. For each user, a reference rate $T_n$ is defined. This could be a common reference for each user, or it could be customized for each user; for example, one could set $T_n$ to be the maximum rate achievable by user n when all other users are inactive. A fairness parameter $\alpha$ between 0 and 1 is selected, and then the exponent $\beta$ is defined as

$$\beta = 10\frac{\alpha + 0.01}{1.1 - \alpha}.$$

The utility for user n is then defined as

$$U_n(R_n) = 1 - \exp(-\beta R_n / T_n)$$

This utility function is plotted as a function of the relative rate $R_n/T_n$ in **Figure 5** for various values of $\alpha$. When $\alpha$ is close to zero, the utility is nearly linear, leading to sum rate maximization. When $\alpha$ is close to 1, the utility emphasizes the importance of each user obtaining at least a small fraction of its reference rate. Non-zero target rates, if used, may be specified explicitly by the operator.

The upstream/downstream ratio allows, in case of technologies that employ full duplex transmission, to add fairness mechanisms that focus on the US vs DS trade-off. The input mechanism for the upstream/downstream ratio is for example a slider or a knob.

The action panel 64 include buttons which allow the operator to control execution of steps S4 to S6 as described hereafter. The details of the buttons are not illustrated for simplicity.

Referring again to Figure 3, based on the manipulation of the control panel 63 by the operator, the monitoring device 5 receives the data rate related controls input by the operator (Step S4).

Then, for example in response to the operator activating a "calculate" button of the configuration panel 64, the monitoring device 5 determines an explicit utility specification (utility function and target rates) based on the data rate related controls (Step S5). The monitoring device then performs an optimization problem to determine predicted rates , which are for example the data rates for the respective data lines 4 which optimize (maximize the value of) the utility function, subject to the rates being greater than or equal to the target rates (Step S6). This optimization problem is subject to the constraints of a specified aggregate transmit power (ATP) and a specified transmit power spectral density (PSD) mask. The solution to the optimization problem also determines the configuration parameters that are expected to result in the predicted rates, when applied to the system. The determined predicted rates may be displayed on the performance panel 61 and steps S3 to S6 may be repeated until the operator find a suitable configuration.

Then, for example in response to the operator activating a "configure" button of the configuration panel 64, the monitoring device 5 configures the access node 2 in function of the determined configuration parameters (Step S7). This may comprise for example gain scaling or gain adjuster parameter, channel conditioning, acting on upstream and downstream time slot opportunities...

More specifically, configuration parameters may comprise the gain scaling or gain adjuster parameters, which are intended for adjustment of the transmit power of each tone, and which may be used for PSD adjustment and SNR adjustment. These parameters can preferably be used to balance data rates between different users. The gain scaling parameters can be computed e.g. by adding weights $w_n$ for each line n to the column norm based scaling (CNBS) algorithm and where the weights are determined in function of the utility specification, which themselves depends on the chosen data rate balance related controls. For example, the weights could be determined based on the derivative of the utility function evaluated at the current rate. A modified CNBS algorithm that works with such weights is provided hereunder, where $|[P_k]_{m,n}|$ denotes the precoder coefficient on row m and column n of the precoder matrix of the k-th tone before the application of gain scaling, where $[P'_k]_{m,n}$ is the corresponding precoder coefficient after the application of gain scaling,, and $mask_k$ denotes the power spectral density mask at tone k. A higher value of $w_n$ results in a higher transmit power on line n, and as such can also increase the data rate of line n, at the cost of reducing the data rates of the other lines.

$$q_k^n = \frac{w_n}{\sum_{m=1}^{N} \left| [P_k]_{m,n} \right|^2}, \forall k, n$$

$$p_k^n = \sum_{m=1}^{N} \left| [P_k]_{n,m} \right|^2 q_k^m, \forall k, n$$

$$\beta_k = \max_n p_k^n, \forall k$$

$$[P'_k]_{n,m} = \sqrt{\frac{mask_k}{\beta_k} q_k^n} [P_k]_{n,m}, \forall k, n$$

A second data rate balance configuration parameter refers to channel conditioning. Two concepts are important to understand channel conditioning:

- DMT: DSL technology employs discrete multitone transmission (DMT) as a modulation technique. This is a technique that consists of dividing the frequency range into small frequency bands, also referred to as tones. For instance, in G.fast each frequency band is about 51.75 kHz wide. In each tone, one can then transmit a certain QAM symbol (of a certain constellation size). The advantage of DMT is that the transmission on each of the tones is fully decoupled, creating multiple parallel transmission subchannels.
- Crosstalk and vectoring: At high frequencies different copper lines will interfere into each other which is also referred to as crosstalk. This means that the transmission on one line impacts the transmission on a neighboring line. This crosstalk can be mitigated by the application of vectoring. Vectoring consists of combining the signals (at the access node) such that the interference is mitigated at the corresponding receivers. The efficiency of vectoring strongly depends on the condition number of the channel matrix, the latter consisting of direct channels on the diagonal of the matrix and crosstalk channels on the off-diagonal of the matrix.

Channel conditioning refers to the technique of disabling data communication on a subset of lines on a given tone, where the full channel matrix is poorly conditioned. The motivation for doing this is to improve the condition number of the (reduced) channel matrix and as such improve the efficiency of vectoring. Applying channel conditioning for a line on a series of tones has the following effect:

- It reduces the data rate of the corresponding line; and
- It potentially increases the data rate of the other lines of the cable binder.

The application of channel conditioning can thus be used to balance data rates between different lines.

A third data rate balance configuration parameter refers to upstream and downstream time slot opportunities. Time division duplexing (TDD) refers to a (half) duplex transmission technology in which downstream and upstream transmission are separated by allocating different time slots to each direction in the same frequency band. G.fast employs TDD with (e.g.) TDD frame sizes of 750 μs. Each TDD frame is divided into a part in which all lines transmit in downstream, and a part in which all lines transmit in upstream.

As an example, a system may be provided with 4 data transmission lines (i.e. copper lines) that are active on about 2000 tones and have 36 time slots. In this example 4 time slots may be allocated to upstream transmission, and 32 slots may be allocated to downstream transmission. The ratio between upstream and downstream can be varied to control the balance between upstream and downstream rates. Optimizing data rate balances using this technique is also referred to as using upstream and downstream time slot opportunities.

Conventionally, it is not easy for an operator to specify network goals and preferences. Such network goals cannot be specified by a simple formula such as maximize the minimum data rate. In the method of Figure 3, an operator is enabled to look at two alternatives, e.g. from two different fairness slider settings, and determine based on the shown results which is preferable. Thereby the method of Figure 3 allows the operator to browse and compare a range of options that are optimal according to some criteria, while varying the criteria. In this manner, interactively, an attractive solution can be selected by the operator. The plot is interactive in the sense that the operator can indicate how he wants to modify the current data rate balance towards an adapted data rate balance, for example via a fairness factor. Via interactive mechanisms, the corresponding vectoring configurations are steered to achieve this adapted data rate balance. Note however, that such new balance may not be practically achieved and the algorithms will only try based on best effort to achieve the requested data rate balance, but without guarantee. If the result is not satisfactory, the operator can further modify the requested data rate balance until he is satisfied with the achieved data rate balance which is configured in the network.

**Figure 6** is a structural view of the monitoring device 5, which comprises a processor 7 and a memory 8. The memory 8 stores a computer program P which, when executed by the processor 7, causes the monitoring device 5 to execute the method described above with reference to Figure 3.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the FIGs., including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

**Claims**

1. Method for configuring data transmission over a plurality of data lines (4) connected to a single access device (2) using vectoring technology, wherein interference introduces dependencies between the data rates that are achievable on the data lines (4), the method being executed by a monitoring device (5) and comprising:

   - obtaining (S1) operational data of the data lines (4), wherein the operational data includes data rates of the data lines and information indicative of channel conditions, including complex crosstalk channel coefficients;
   - outputting (S3) the data rates to an operator;
   - providing (S3) the operator with an input mechanism to input at least one data rate balance related control such as per line priority levels, a utility specification, a fairness parameter, an upstream/downstream ratio;
- receiving (S4) the at least one data rate balance related control via the input mechanism;
- determining (S6) configuration parameters for the access device (2) in function of the at least one data rate balance related control;
- outputting a predicted effect of the configuration parameters on the data rates to the operator and providing the operator with the input mechanism to change the at least one data rate balance related control; and
- configuring (S7) the access device (2) using the determined configuration parameters.

2. Method according to claim 1, executed in the DSL domain.

3. Method according to one of claims 1 to 2, comprising determining (S2) configuration guidance in function of the operational data, the configuration guidance specifying at least one of a maximum data rate and a minimum data rate, and outputting the configuration guidance to the operator.

4. Method according to any one of the previous claims, wherein the at least one data rate balance related control comprise a utility specification, the utility specification comprising a utility function and target rates, the method comprising determining (S6) predicted rates for the data lines (4) which maximize the utility function subject to meeting or exceeding the target rates.

5. Method according to claim 4, wherein the at least one data rate balance related control comprises a fairness parameter, and wherein the utility specification depends on the fairness parameter.

6. Method according to one of the claims 4 and 5, wherein the at least one data rate balance related control comprise a priority level for each data line (5), and wherein the utility specification depends on the priority levels.

7. Method according to one of claims 4 to 6, comprising outputting the predicted rates to the operator.

8. Method according to any one of the previous claims, wherein the at least one data rate balance related control comprises an upstream-downstream ratio.

9. Method according to any one of the previous claims, wherein the configuration parameters for the access device comprise at least one of gain scaling parameters and transmit PSD control parameters.

10. Method according to any one of the previous claims, wherein the configuration parameters specify channel conditioning.

11. Method according to any one of the previous claims, wherein the configuration parameters specify upstream and downstream time slot opportunities.

12. A computer readable storage medium comprising instructions, which, when executed cause a data processing apparatus to carry out the steps of the method of any one of the claims 1-11.

13. A computer program product comprising instructions, which, when executed cause a data processing apparatus to carry out the steps of the method of any one of the claims 1-11.

14. Monitoring device (5) for configuring data transmission over a plurality of data lines (4) connected to a single access device (2) using vectoring technology, wherein interference introduces dependencies between the data rates that are achievable on the data lines (4), the monitoring device (5) comprising means (7, 8, P) configured for:

- obtaining (S1) operational data representative of data rates of the data lines (4), wherein the operational data includes information indicative of channel conditions, including complex crosstalk channel coefficients;
- outputting (S3) the data rates to an operator;
- providing (S3) the operator with an input mechanism to input at least one data rate balance related control such as per line priority levels, a utility specification, a fairness parameter, an upstream/downstream ratio;
- receiving (S4) the at least one data rate balance related control via the input mechanism;
- determining (S6) configuration parameters for the access device (2) in function of the at least one data rate balance related control;
- outputting a predicted effect of the configuration parameters on the data rates to the operator and providing the operator with the input mechanism to change the at least one data rate balance related control; and
- configuring (S7) the access device (2) using the determined configuration parameters.

**Patentansprüche**

1. Verfahren zum Konfigurieren einer Datenübertragung über mehrere Datenleitungen (4), die mit einer einzelnen Zugriffsvorrichtung (2) unter Verwendung einer Vectoring-Technologie verbunden sind, wobei eine Interferenz Abhängigkeiten zwischen den Datenraten, die auf den Datenleitungen (4) erreichbar sind, einführen, wobei das Verfahren durch eine Überwachungsvorrichtung (5) ausgeführt wird und Folgendes umfasst:

   - Erhalten (S1) von Betriebsdaten der Datenleitungen (4), wobei die Betriebsdaten Datenraten der Datenleitungen und Informationen, die Kanalbedingungen, die komplexe Nebensprechenkanalkoeffizienten enthalten, angeben, enthalten;
   - Ausgeben (S3) der Datenraten an eine Bedienperson;
   - Bereitstellen (S3) für die Bedienperson eines Eingabemechanismus, um zumindest eine Steuerung bezüglich eines Datenratenausgleichs, wie etwa Prioritätsstufen pro Leitung, eine Utility-Spezifikation, einen Fairnessparameter, ein Aufwärtsstrecken-/Abwärtsstreckenverhältnis, einzugeben;
   - Empfangen (S4) der mindestens einen Steuerung bezüglich eines Datenratenausgleichs über den Eingabemechanismus;
   - Bestimmen (S6) von Konfigurationsparametern für die Zugriffsvorrichtung (2) als Funktion der mindestens einen Steuerung bezüglich eines Datenratenausgleichs;
   - Ausgeben einer vorhergesagten Auswirkung der Konfigurationsparameter auf die Datenraten an die Bedienperson und Bereitstellen für die Bedienperson des Eingabemechanismus, um die mindestens eine Steuerung bezüglich eines Datenratenausgleichs zu ändern; und
   - Konfigurieren (S7) der Zugriffsvorrichtung (2) unter Verwendung der bestimmten Konfigurationsparameter.

2. Verfahren nach Anspruch 1, das in der DSL-Domäne ausgeführt wird.

3. Verfahren nach einem der Ansprüche 1 bis 2, das umfasst, eine Konfigurationsanleitung als Funktion der Betriebsdaten zu bestimmen (S2), wobei die Konfigurationsanleitung eine maximale Datenrate und/oder eine minimale Datenrate spezifiziert, und die Konfigurationsanleitung an die Bedienperson auszugeben.

4. Verfahren nach einem der vorhergehenden Ansprüche, wobei die mindestens eine Steuerung bezüglich eines Datenratenausgleichs eine Utility-Spezifikation umfasst, wobei die Utility-Spezifikation eine Utility-Funktion und Zielraten umfasst, wobei das Verfahren umfasst, vorhergesagte Raten für die Datenleitungen (4) zu bestimmen (S6), die die Utility-Funktion, die der Bedingung unterliegt, die Zielraten zu erfüllen oder zu überschreiten, maximieren.

5. Verfahren nach Anspruch 4, wobei die mindestens eine Steuerung bezüglich eines Datenratenausgleichs einen Fairnessparameter umfasst und wobei die Utility-Spezifikation von dem Fairnessparameter abhängt.

6. Verfahren nach einem der Ansprüche 4 und 5, wobei die mindestens eine Steuerung bezüglich eines Datenratenausgleichs eine Prioritätsstufe für jede Datenleitung (5) umfasst und wobei die Utility-Spezifikation von den Prioritätsstufen abhängt.

7. Verfahren nach einem der Ansprüche 4 bis 6, das umfasst, die vorhergesagten Raten an die Bedienperson auszugeben.

8. Verfahren nach einem der vorhergehenden Ansprüche, wobei die mindestens eine Steuerung bezüglich eines Datenratenausgleichs ein Aufwärtsstrecken-Abwärtsstreckenverhältnis umfasst.

9. Verfahren nach einem der vorhergehenden Ansprüche, wobei die Konfigurationsparameter für die Zugriffsvorrichtung Verstärkungsskalierungsparameter und/oder Sende-PSD-Steuerparameter umfassen.

10. Verfahren nach einem der vorhergehenden Ansprüche, wobei die Konfigurationsparameter eine Kanalaufbereitung spezifizieren.

11. Verfahren nach einem der vorhergehenden Ansprüche, wobei die Konfigurationsparameter Aufwärtsstrecken- und Abwärtsstreckenzeitfenstergelegenheiten spezifizieren.

12. Computerlesbares Speichermedium, das Anweisungen umfasst, die dann, wenn sie ausgeführt werden, bewirken, dass eine Datenverarbeitungsvorrichtung die Schritte des Verfahrens nach einem der Ansprüche 1-11 ausführt.

13. Computerprogrammprodukt, das Anweisungen umfasst, die dann, wenn sie ausgeführt werden, bewirken, dass eine Datenverarbeitungsvorrichtung die Schritte des Verfahrens nach einem der Ansprüche 1-11 ausführt.

14. Überwachungsvorrichtung (5) zum Konfigurieren einer Datenübertragung über mehrere Datenleitungen (4), die mit einer einzelnen Zugriffsvorrichtung (2) unter Verwendung von Vectoring-Technologie verbunden sind, wobei eine Interferenz Abhängigkeiten zwischen den Datenraten, die auf den Datenleitungen (4) erreichbar sind, einführen, wobei die Überwachungsvorrichtung (5) Mittel (7, 8, P) umfasst, die konfiguriert sind zum:

- Erhalten (S1) von Betriebsdaten, die Datenraten der Datenleitungen (4) repräsentieren, wobei die Betriebsdaten Informationen enthalten, die Kanalbedingungen angeben, die komplexe Nebensprechenkanalkoeffizienten enthalten;
- Ausgeben (S3) der Datenraten an eine Bedienperson;
- Bereitstellen (S3) für die Bedienperson eines Eingabemechanismus, um mindestens eine Steuerung bezüglich eines Datenratenausgleichs, wie etwa Prioritätsstufen pro Leitung, eine Utility-Spezifikation, einen Fairnessparameter, ein Aufwärtsstrecken-/Abwärtsstreckenverhältnis, einzugeben;
- Empfangen (S4) der mindestens einen Steuerung bezüglich eines Datenratenausgleichs über den Eingabemechanismus;
- Bestimmen (S6) von Konfigurationsparametern für die Zugriffsvorrichtung (2) als Funktion der mindestens einen Steuerung bezüglich eines Datenratenausgleichs;
- Ausgeben einer vorhergesagten Auswirkung der Konfigurationsparameter auf die Datenraten an die Bedienperson und Bereitstellen für die Bedienperson des Eingabemechanismus, um die mindestens eine Steuerung bezüglich eines Datenratenausgleichs zu ändern; und
- Konfigurieren (S7) der Zugriffsvorrichtung (2) unter Verwendung der bestimmten Konfigurationsparameter.

**Revendications**

1. Procédé de configuration d'une transmission de données sur une pluralité de lignes de données (4) reliées à un dispositif d'accès unique (2) au moyen d'une technologie de vectorisation, l'interférence introduisant des dépendances entre les débits de données qu'il est possible d'obtenir sur les lignes de données (4), le procédé étant exécuté par un dispositif de surveillance (5) et comprenant :

- l'obtention (S1) de données d'exploitation des lignes de données (4), les données d'exploitation comportant des débits de données des lignes de données et des informations indiquant des conditions de canaux, notamment des coefficients complexes de canaux en diaphonie ;
- la fourniture (S3) des débits de données à un opérateur ;
- la mise à disposition (S3) de l'opérateur d'un mécanisme d'entrée aux fins d'entrer au moins une commande relative à l'équilibrage des débits de données, telle que des niveaux de priorité par lignes, une spécification d'utilité, un paramètre d'équité, un rapport sens montant/sens descendant ;
- la réception (S4) de l'au moins une commande relative à l'équilibrage des débits de données par le biais du mécanisme d'entrée ;
- la détermination (S6) de paramètres de configuration pour le dispositif d'accès (2) en fonction de l'au moins une commande relative à l'équilibrage des débits de données ;
- la fourniture d'un effet prédit des paramètres de configuration sur les débits de données à l'opérateur et la mise à disposition de l'opérateur du mécanisme d'entrée aux fins de modifier l'au moins une commande relative à l'équilibrage des débits de données ; et
- la configuration (S7) du dispositif d'accès (2) au moyen des paramètres de configuration déterminés.

2. Procédé selon la revendication 1, exécuté dans le domaine DSL.

3. Procédé selon l'une des revendications 1 à 2, comprenant la détermination (S2) d'une aide à la configuration en fonction des données d'exploitation, l'aide à la configuration spécifiant un débit de données maximal et/ou un débit de données minimal, et la fourniture de l'aide à la configuration à l'opérateur.

4. Procédé selon l'une quelconque des revendications précédentes, dans lequel l'au moins une commande relative à l'équilibrage des débits de données comprend une spécification d'utilité, la spécification d'utilité comprenant une fonction d'utilité et des débits cibles, le procédé comprenant la détermination (S6) de débits prédits pour les lignes de données (4) qui maximisent la fonction d'utilité sous réserve d'atteindre ou de dépasser les débits cibles.

5. Procédé selon la revendication 4, dans lequel l'au moins une commande relative à l'équilibrage des débits de données comprend un paramètre d'équité, et dans lequel la spécification d'utilité dépend du paramètre d'équité.

6. Procédé selon l'une des revendications 4 et 5, dans lequel l'au moins une commande relative à l'équilibrage des débits de données comprend un niveau de priorité pour chaque ligne de données (5), et dans lequel la spécification d'utilité dépend des niveaux de priorité.

7. Procédé selon l'une des revendications 4 à 6, comprenant la fourniture des débits prédits à l'opérateur.

8. Procédé selon l'une quelconque des revendications précédentes, dans lequel l'au moins une commande relative à l'équilibrage des débits de données comprend un rapport sens montant/sens descendant.

9. Procédé selon l'une quelconque des revendications précédentes, dans lequel les paramètres de configuration pour le dispositif d'accès comprennent des paramètres d'adaptation de gain et/ou des paramètres de commande de PSD en émission.

10. Procédé selon l'une quelconque des revendications précédentes, dans lequel les paramètres de configuration spécifient un conditionnement de canaux.

11. Procédé selon l'une quelconque des revendications précédentes, dans lequel les paramètres de configuration spécifient des opportunités de créneaux temporels sens montant et sens descendant.

12. Support d'enregistrement lisible par ordinateur comprenant des instructions qui, lorsqu'elles sont exécutées, amènent un appareil de traitement de données à mettre en œuvre les étapes du procédé selon l'une quelconque des revendications 1 à 11.

13. Produit-programme d'ordinateur comprenant des instructions qui, lorsqu'elles sont exécutées, amènent un appareil de traitement de données à mettre en œuvre les étapes du procédé selon l'une quelconque des revendications 1 à 11.

14. Dispositif de surveillance (5) destiné à configurer une transmission de données sur une pluralité de lignes de données (4) reliées à un dispositif d'accès unique (2) au moyen d'une technologie de vectorisation, l'interférence introduisant des dépendances entre les débits de données qu'il est possible d'obtenir sur les lignes de données (4), le dispositif de surveillance (5) comprenant des moyens (7, 8, P) configurés pour :

- obtenir (S1) des données d'exploitation représentant des débits de données des lignes de données (4), les données d'exploitation comportant des informations indiquant des conditions de canaux, notamment des coefficients complexes de canaux en diaphonie ;
- fournir (S3) les débits de données à un opérateur ;
- mettre à disposition (S3) de l'opérateur un mécanisme d'entrée aux fins d'entrer au moins une commande relative à l'équilibrage des débits de données, telle que des niveaux de priorité par lignes, une spécification d'utilité, un paramètre d'équité, un rapport sens montant/sens descendant ;
- recevoir (S4) l'au moins une commande relative à l'équilibrage des débits de données par le biais du mécanisme d'entrée ;
- déterminer (S6) des paramètres de configuration pour le dispositif d'accès (2) en fonction de l'au moins une commande relative à l'équilibrage des débits de données ;
- fournir un effet prédit des paramètres de configuration sur les débits de données à l'opérateur et mettre à disposition de l'opérateur le mécanisme d'entrée permettant de modifier l'au moins une commande relative à l'équilibrage des débits de données ; et
- configurer (S7) le dispositif d'accès (2) au moyen des paramètres de configuration déterminés.

FIG. 1

FIG. 2

Receive DSL operational data — S1

Determine configuration guidance — S2

Display GUI — S3

Receive data rate balance Related control — S4

Determine utility specification — S5

Determine configuration parameters and corresponding predicted rates — S6

Configure Access Device — S7

FIG. 3

5

| Z | P | 8

FIG. 6

α=1

α=0,5

α=0

Utility

Relative Rate

FIG. 5

FIG. 4

**REFERENCES CITED IN THE DESCRIPTION**

**Patent documents cited in the description**

- US 20150222326 A
- US 20060280237 A
- US 20160072532 A